# EUROPÄISCHE PATENTSCHRIFT

(11) **EP 0 713 274 B1**
(45) Veröffentlichungstag und Bekanntmachung des Hinweises auf die Patenterteilung: **16.02.2000**
(21) Anmeldenummer: 95118220.3
(22) Anmeldetag: 20.11.1995
(51) Int. Cl.: H01S 3/06, H01S 3/098, H01S 3/083

(54) **Modengekoppelter Faserlaser**
Mode-locked fiber laser
Laser à fibre optique à blocage de mode

(30) Priorität: 21.11.1994 DE 4441133
(43) Veröffentlichungstag der Anmeldung: 22.05.1996
(73) Patentinhaber: ALCATEL, 75008 Paris (FR)
(72) Erfinder: Pfeiffer, Thomas, Dr., D-70569 Stuttgart (DE)
(74) Vertreter: Schätzle, Albin, Dipl.-Phys.

(56) Entgegenhaltungen:
- US-A- 4 025 875
- US-A- 5 274 659
- SHAN X ET AL: "Stabilising Er fibre soliton laser with pulse phase locking" ELECTRONICS LETTERS, Bd. 28, Nr. 2, 16.Januar 1992, Seiten 182-184, XP000280611
- TAKARA H ET AL: "Stabilisation of a modelocked Er-doped fibre laser by suppressing the relaxation oscillation frequency component" ELECTRONICS LETTERS, Bd. 31, Nr. 4, 16.Februar 1995, Seite 292/293 XP000513687

## Beschreibung

Die Erfindung betrifft einen modengekoppelten Faserlaser zur Erzeugung von gepulstem Signallicht nach dem Oberbegriff des Patentanspruchs 1.

In dem Artikel "Stabilising Er fibre soliton laser with pulse phase locking" aus Electronic Letters, Januar 1992, Seiten 182-184, ist eine Synchronisationsmethode für einen aktiv modengekoppelten Faserlaser beschrieben. Der Faserlaser, der als optischer Pulsgenerator arbeitet, ist als Ringlaser mit einem Mittel zur Änderung der optischen Weglänge des Ringresonators ausgeführt. Die Synchronisation des Faserlasers auf eine externe Taktfrequenz erfolgt über ein Regelsignal für das Mittel zur Änderung der optischen Weglänge. Das Regelsignal wird über eine Regeleinrichtung mit einer PLL (phased locked loop) aus einem Teil des Ausgangssignals des Faserlasers ermittelt. Der Phasenvergleich in der PLL zwischen Impulsfolgefrequenz und externer Taktfrequenz findet im GHz-Bereich statt, was den Einsatz von teurer Hochfrequenz-Elektronik erforderlich macht.

Es ist deshalb Aufgabe der Erfindung eine technisch einfacheren, modengekoppelten Faserlaser zur Verfügung zu stellen dessen Umlauffrequenz sich mit einer einfacheren Regeleinrichtung auf eine vorgegebene Impulsfolgefrequenz synchronisieren läßt.

Diese Aufgabe wird durch die Lehre des Patentanspruchs 1 gelöst. Vorteilhafte Ausgestaltungen sind den Unteransprüchen zu entnehmen. Ein besonderer Vorteil der Erfindung liegt in der flexiblen Anwendung der Synchronisationsmethode auf Faserlaser mit unterschiedlichen Impulsfolgefrequenzen, da die Synchronisationsmethode unabhängig von der Wahl der Impulsfolgefrequenz ist.

Im folgenden wird die Erfindung anhand eines Ausführungsbeispiels unter Zuhilfenahme der Figuren 1 bis 4 erläutert. Es zeigen:
- Fig. 1: eine schematische Darstellung eines Ausführungsbeispiels des erfindungsgemäßen modengekoppelten Faserlasers,
- Fig. 2: einen schematisch dargestellten Aufbau einer Regeleinrichtung des erfindungsgemäßen modengekoppelten Faserlasers,
- Fig. 3: eine schematische Darstellung einer Detektionseinrichtung der Regeleinrichtung aus Fig. 2, und
- Fig. 4: ein Diagramm, in dem die Abhängigkeit des Störsignals von der Abweichung der Synchronisation zwischen der Umlauffrequenz und der externen Taktfrequenz dargestellt ist.

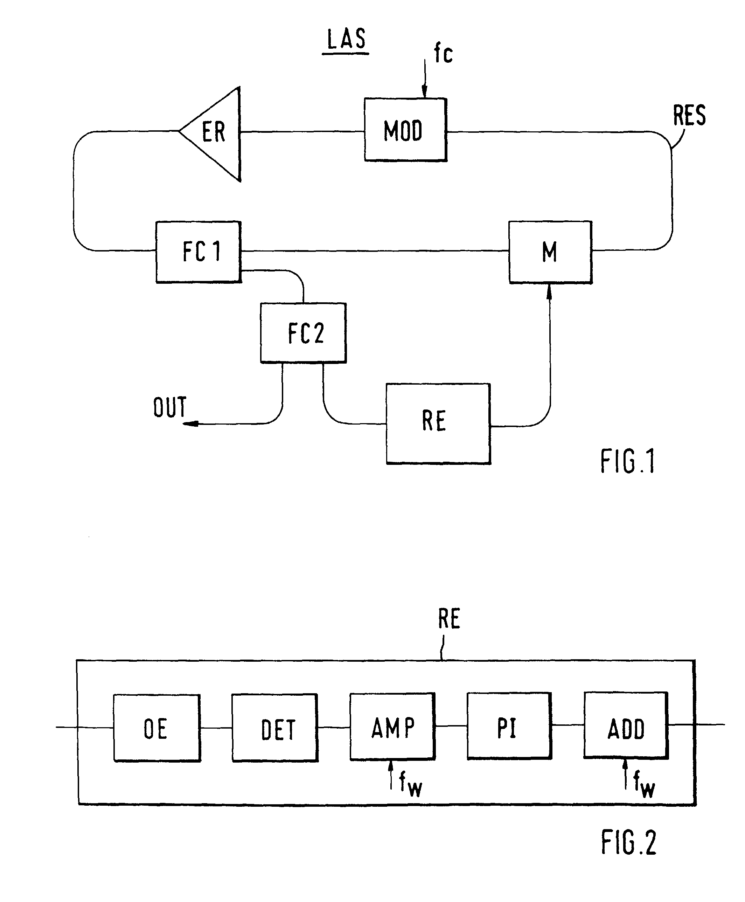

Ein Ausführungsbeispiel der Erfindung wird nun anhand der Figuren 1 bis 4 beschrieben.

Fig. 1 zeigt einen als aktiv modengekoppelten Faserringlaser LAS ausgeführten Faserlaser, der synchron zu einem externen Takt betreibbar ist. Der Faserringlaser LAS weist hierzu einen Modulator MOD in Form eines Mach-Zehnder-Interferometers zum Einkoppeln eines externen Taktsignals mit der Frequenz f_{c} in einen Ringresonator RES auf. Ferner sind mit dem als Faserresonator ausgebildeten Ringresonator RES ein optischer Verstärker ER mit einem nicht abgebildeten Pumplaser, eine Auskoppelvorrichtung FC1 zum Auskoppeln eines Ausgangssignals A und ein Mittel M zur Änderung der optischen Weglänge L des Ringresonators RES verbunden. Mit der Auskoppelvorrichtung FC1 ist eine weitere Koppelvorrichtung FC2 verbunden, durch die ein Teil des Ausgangsignals A einer Regeleinrichtung RE zum Steuern des Mittels M zugeführt wird. Als optischer Verstärker ER wird ein Faserverstärker, z.B. ein erbiumdotierter Faserverstärker verwendet. Die Koppelvorrichtungen FC1 und FC2 sind vorteilhafterweise als Faserkoppler ausgebildet, wobei durch die Auskoppelvorrichtung FC1 z.B. 20 % des Lichts aus dem Ringresonator ausgekoppelt und über die Koppelvorrichtung FC2 z.B. 10 % des Lichts in die Regeleinrichtung RE eingekoppelt und 90 % dem Ausgang OUT des Faserringlasers LAS zugeführt werden.

Als Mittel M zur Änderung der optischen Weglänge L des Ringresonators RES eignet sich besonders ein Bauelement mit einem elektrooptisch aktiven Medium, dessen Brechzahl sich bei Anliegen eines elektrischen Feldes ändert. Solche Bauelemente sind z.B. als elektrooptische Phasenmodulatoren bekannt. Als Mittel M zur Änderung der optischen Weglänge L kann auch eine Heiz- und/oder Kühlvorrichtung verwendet werden, die mit dem Ringresonator RES oder auch nur einem Teil des Faserresonators thermisch gekoppelt und über die Regeleinrichtung RE ansteuerbar ist. Als besonders vorteilhaft erweist sich hierzu eine speziell um einen Heiz- oder Kühlkern gewickelte optische Faserspule, die ein Bestandteil des Faserresonators RES ist. Durch eine Temperaturänderung des Ringresonators RES oder eines Teiles davon kann somit eine Längenänderung des Ringresonators RES erzielt werden.

Zur Änderung der optischen Weglänge L des Ringresonators RES kann die Faser auch unterbrochen sein und einen Luftspalt zeigen, was z.B. bei der Verwendung sogenannter GRIN-Linsen, die an den beiden Faserenden angebracht sind, auch reflexionsfrei möglich ist. Eines der beiden Faserenden wird dabei auf einem mechanisch beweglichen Stellglied, z.B. einem piezoelektrischen Stellglied befestigt und der Luftspalt zwischen den beiden Faserenden durch die Bewegung des Stellgliedes verändert. Eine Veränderung des Luftspalts bewirkt dabei eine Änderung der Resonatorlänge. Eine weitere Möglichkeit zur Änderung der optischen Weglänge L liegt in der mechanischen Dehnung der Faser oder eines Teils davon, die sowohl eine direkte mechanische Veränderung der Faserlänge als auch Veränderungen der optischen Eigenschaften bewirkt.

Von den Mitteln M zur Veränderung der optischen Weglänge des Ringresonators RES wird bei der Verwendung des Faserringlasers 1 innerhalb eines Nachrichtenübertragungssystems ein Durchstimmbereich von mehr als 1 nm gefordert.

Nach dem Einschalten des Pumplasers des aktiv modengekoppelten Faserringlasers LAS bildet sich aus dem Rauschen heraus im Ringresonator RES Signallicht durch stimulierte Emissionen im optischen Verstärker ER aus. Durch Ansteuern des Modulators mit der externen Taktfrequenz f_{c} bildet sich im Ringresonator RES gepulstes Signallicht mit der Impulsfolgefrequenz fₚ aus, die der externen Taktfrequenz f_{c} entspricht. Bei optimaler Synchronisation ist die sich ausbildende Impulsfolgefrequenz fₚ ein ganzzahliges Vielfaches der Umlauffrequenz fᵤ des Lichts im Ringresonator RES. Die Umlauffrequenz fᵤ bestimmt sich aus fᵤ = c/(R X n), mit c = Lichtgeschwindigkeit im Vakuum, R = Resonatorlänge und n = Brechungsindex. Mit z.B. L = 30m und n = 1,5 ergibt sich eine Umlauffrequenz von f = 6.67 MHz. Die Impulsfolgefrequenz beträgt z.B. 6,67 GHz. Tritt nun z.B. aufgrund von fertigungstechnischen Toleranzen oder aufgrund von Temperaturänderungen eine Längenänderung der Resonatorlänge auf, so entsteht eine Abweichung der Synchronisation zwischen der Umlauffrequenz fᵤ und der externen Taktfrequenz f_{c}. Über die Regeleinrichtung RE und das Mittel M zur Änderung der optischen Weglänge L wird die Umlauffrequenz fᵤ auf die externe Taktfrequenz f_{c} synchronisiert.

Fig. 2 zeigt nur einen schematisch dargestellten Aufbau der Regeleinrichtung aus Fig. 1. Die Regeleinrichtung RE beinhaltet einen optisch/elektrischen Wandler OE, eine Detektionseinrichtung DET, einen phasenempfindlichen Verstärker AMP und einen Regler PI.

Der optisch/elektrische Wandler OE beinhaltet z.B. eine Photodiode. Im optisch/elektrischen Wandler OE wird ein aus dem optischen Ausgangssignal A ausgekoppelter Teil des Lichts optisch/elektrisch gewandelt. Das Ausgangssignal A des Faserringlasers LAS beinhaltet neben dem Signallicht auch ein Störsignal. Das Störsignal rührt von unerwünschten Oszillationen her, die in Faserlasern z.B. aufgrund von Schwankungen der Pumpwellenlänge oder der Pumpleistung des Pumplasers oder von Schwankungen der Ringverluste im Ringresonator RES durch thermische oder mechanische äußere Einflüsse auftreten. Die Amplitude des Störsignals verändert sich mit dem Grad der Synchronisation der Umlauffrequenz fᵤ auf die externe Taktfrequenz f_{c}. Bei optimaler Synchronisation ist die Amplitude des Störsignals minimal. Mit zunehmender Abweichung der Synchronisation der Umlauffrequenz fᵤ auf die Taktfrequenz f_{c} (positiv oder negativ) steigt auch die Amplitude des Störsignals. Die Amplitude des Störsignals kann somit als Maß für die Abweichung der Synchronisation der Umlauffrequenz fᵤ auf die externe Taktfrequenz f_{c} und damit als Kriterium für die Synchronisation herangezogen werden. Die Frequenz des Störsignals liegt mit < 100 kHz deutlich unter der der Impulsfolgefrequenz fₚ und der Taktfrequenz f_{c}, die in der Größenordnung von 1 MHz bis 100 GHz liegen. Als Photodiode für den optisch/elektrischen Wandler OE kann somit vorteilhafterweise eine "langsame" Photodiode eingesetzt werden, die nur Signale mit einer Frequenz von z.B. < 150 kHz detektiert.

Das Ausgangssignal des optisch/elektrischen Wandlers OE beinhaltet das elektrisch gewandelte Signallicht und das elektrisch gewandelte Störsignal. Dieses Ausgangssignal wird der Detektionseinrichtung DET zugeführt.

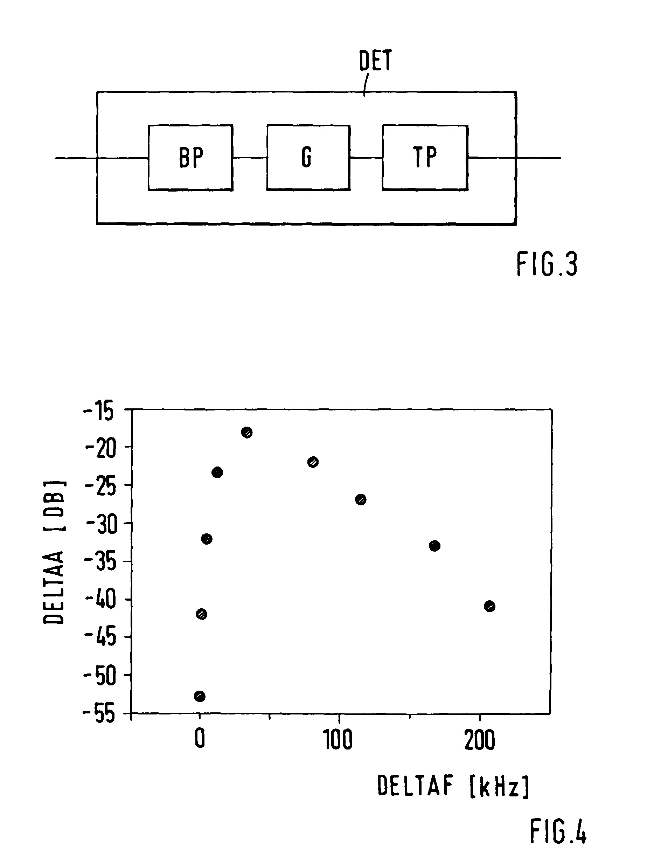

In der Detektionseinrichtung DET wird das Störsignal aus dem aus dem optisch/elektrischen Wandler OE gewonnenen elektrischen Signal herausgefiltert und der Effektivwert der Amplitude des Störsignals bestimmt. Näheres hierzu ist zu Fig. 3 beschrieben.

Das Ausgangssignal der Detektionseinrichtung DET wird dem Verstärker AMP, der als phasenempfindlicher Lock-In-Verstärker ausgebildet ist, zugeführt und dort phasenempfindlich gleichgerichtet. Im nachgeschalteten Regler PI, einem sogenannten PI (D) Regler wird das gleichgerichtete Signal idealerweise auf den Minimalwert geregelt. Das Ausgangssignal des Reglers PI wird über einen Addierer ADD dem Mittel M zur Änderung der optischen Weglänge L des Ringresonators RES zugeführt. Um das Lock-in-Verfahren nutzen zu können, wird das aus dem Regler PI gewonnene Regelsignal im Addierer ADD mit einem Wobbelsignal mit der Frequenz f_{w}, z.B. mit f_{w} = 100 Hz, überlagert und das elektrische Signal im Lock-in-Verstärker bei f_{w} = 100 Hz phasenempfindlich gleichgerichtet. Durch das Wobbeln, was ein dem Fachmann bekanntes Verfahren darstellt, bei dem ein zu regelndes System geringfügig gestört wird, hier mit der Frequenz von f_{w} = 100 Hz, oszilliert der Regelkreis ständig um den optimalen Arbeitspunkt, was zu einer periodischen Störung führt. Aufgrund der periodischen Störung läßt sich die Richtung einer ggf. vorliegenden Abweichung der Synchronisation von Umlauffrequenz fᵤ und externer Taktfrequenz f_{c} leicht feststellen. Im Addierer ADD kann dem Regelsignal zusätzlich eine einstellbare Gleichspannung überlagert werden, um den Arbeitspunkt des Mittels M zur Änderung der optischen Weglänge L grob voreinzustellen.

Fig. 3 zeigt nun eine schematische Darstellung der Detektionseinrichtung aus Fig. 2. Die Detektionseinrichtung DET beinhaltet eine Bandpaß BP, einen Gleichrichter G und einen Tiefpaß TP. Im Bandpaß BP wird das Störsignal aus dem aus dem optisch/elektrischen Wandler OE gewonnene elektrischen Signal herausgefiltert. Der Durchlaßbereich des Bandpasses BP beträgt z.B. 10 kHz bis 100 kHz. Das Störsignal wird dem phasenempfindlichen Gleichrichter G zugeführt, wo es gleichgerichtet wird, und daran anschließend dem Tiefpaß TP, wo es geglättet und somit der Effektivwert der Amplitude bestimmt wird. Die Grenzfrequenz des Tiefpasses TP beträgt z.B. < 100 Hz.

Fig. 4 zeigt nun ein Diagramm, in dem die Abhängigkeit des Störsignals von der Abweichung der Synchronisation zwischen der Umlauffrequenz fᵤ und der externen Taktfrequenz f_{c} dargestellt ist. Auf der Vertikalen ist die relative Amplitudenänderung DELTAA des Störsignals bezogen auf eine Referenzamplitude in Dezibel (DB) aufgetragen. Auf der Horizontalen ist der Betrag des Absolutwertes der Abweichung DELTAF der Synchronisation zwischen der Umlauffrequenz fᵤ und der externen Taktfrequenz f_{c} in Kilo-Hertz (KHZ) aufgetragen. Die relative Amplitudenänderung DELTAA ist für Abweichungen, die kleiner als plus/minus 40 kHz sind, eine monoton ansteigende Funktion mit großer Steigung. Eine kleine Abweichung resultiert demnach in eine große relative Amplitudenänderung DELTAA. Die relative Amplitudenänderung DELTAA ist somit gut als Regelgröße verwendbar.

Im Ausführungsbeispiel ist ein Faserringlaser LAS beschrieben, ebensogut kann die Erfindung auch auf einen Faserlaser mit einem linearen Faserresonator angewendet werden. Anstelle der Durchführung der Verlustmodulation mit einem Mach-Zehnder-Interferometer kann auch ein gewinnmodulierter Laser verwendet werden.

Ferner werden im Ausführungsbeispiel nur die für das Verständnis erforderlichen Teile und Baugruppen erwähnt. Auf weitere Teile und Baugruppen, wie z.B. Polarisationssteller, optische Isolatoren, Polarisatoren oder spezielle Faser, deren Verwendung, Anordnung, Vorteile oder gar Notwendigkeit dem Fachmann, wie z.B. aus der Druckschrift Electronics Letters, 24th October 1991, Vol. 27, No.22, bekannt sind, wurde in der Beschreibung nicht näher eingegangen.

## Patentansprüche

1. Modengekoppelter Faserlaser (LAS) zur Erzeugung von gepulstem Signallicht einer vorgegebenen Impulsfolgefrequenz, mit einem Faserresonator (RES), einem Mittel (M) zur Änderung der optischen Weglänge(L) des Faserresonators (RES) und einer Regeleinrichtung (RE), die mit dem Faserresonator (RES) und dem Mittel (M) zur Änderung der optischen Weglänge (L) verbunden ist, und die Regeleinrichtung derart beschaffen ist, daß aus einem Teil des Ausgangssignals (A) des Faserlasers (LAS) ein Regelsignal für das Mittel (M) zur Änderung der optischen Weglänge (L) derart erzeugbar ist, daß die Umlauffrequenz des lichtes in dem Faserresonator mit der vorgegebenen Impulsfolgefrequenz synchronisiert ist,
**dadurch gekennzeichnet,** daß die Regeleinrichtung (RE) weiterhin so beschaffen ist, daß ein dem Signallicht überlagertes Störsignal dessen Amplitude als Maß für die Abweichung der Synchronisation der Umlauffrequenz von der vorgegebenen Impulsfolgefrequenz herangezogen wird, und, dessen Frequenz geringer als die Impulsfolgefrequenz ist, ermittelbar ist, und daß aus der Amplitude des Störsignals das Regelsignal ableitbar ist.

2. Modengekoppelter Faserlaser (LAS) nach Anspruch 1, dadurch gekennzeichnet, daß die Regeleinrichtung (RE) einen optisch/elektrischen Wandler (DE), eine Detektionseinrichtung (DET), einen Verstärker (AMP) und einen Regler (PI) beinhaltet, daß in der Detektionseinrichtung (DET) der Effektivwert der Amplitude des Störsignals ermittelbar ist, und daß das Regelsignal für das Mittel (M) zur Änderung der optischen Weglänge (L) aus dem Effektivwert ableitbar ist.

3. Modengekoppelter Faserlaser (LAS) nach Anspruch 1, dadurch gekennzeichnet, daß der Verstärker (AMP) als phasenempfindlicher Verstärker ausgebildet ist und das Regelsignal moduliert (fw) ist.

4. Modengekoppelter Faserlaser (LAS) nach Anspruch 1, dadurch gekennzeichnet, daß der Faserresonator (RES) ein Ringresonator ist.

5. Modengekoppelter Faserlaser (LAS) nach Anspruch 1, dadurch gekennzeichnet, daß der modengekoppelte Faserlaser (LAS) ein aktiv modengekoppelter Faserlaser ist.

## Claims

1. A mode-locked fibre laser (LAS) for generating pulsed signal light of a predetermined pulse repetition frequency, with a fibre resonator (RES), a means (M) for changing the optical wavelength (L) of the fibre resonator (RES), and a control device (RE) which is connected to the fibre resonator (RES) and to the means (M) for changing the optical wavelength (L), the control device being contrived such that a control signal for the means (M) for changing the optical wavelength (L) can be generated from a part of the output signal (A) of the fibre laser (LAS) in such manner that the rotational frequency of the light in the fibre resonator is synchronised with the predetermined pulse repetition frequency, characterised in that the control device (RE) is further contrived such that an interference signal, superimposed upon the signal light, can be determined, whose amplitude is used as a gauge of the deviation in the synchronisation between the rotational frequency and the predetermined pulse repetition frequency and whose frequency is lower than the pulse repetition frequency, and that the control signal can be derived from the amplitude of the interference signal.

2. A mode-locked fibre laser (LAS) according to Claim 1, characterised in that the control device (RE) comprises an opto-electric converter (DE), a detection device (DET), an amplifier (AMP) and a controller (PI), that in the detection device (DET) the effective value of the amplitude of the interference signal can be determined, and that the control signal for the means (M) for changing the optical wavelength (L) can be derived from the effective value.

3. A mode-locked fibre laser (LAS) according to Claim 1, characterised in that the amplifier (AMP) has the form of a phase-sensitive amplifier and the control signal is modulated (fw).

4. A mode-locked fibre laser (LAS) according to Claim 1, characterised in that the fibre resonator (RES) is a ring resonator.

5. A mode-locked fibre laser (LAS) according to Claim 1, characterised in that the mode-locked fibre laser (LAS) is an actively mode-locked fibre laser.

## Revendications

1. Laser à fibre optique à blocage de mode (LAS) pour générer une lumière de signal pulsée à une fréquence de récurrence des impulsions prédéterminée, avec un résonateur à fibre optique (RES), des moyens (M) destinés à modifier la longueur de parcours optique (L) du résonateur à fibre optique (RES) et un dispositif de régulation (RE), qui est relié au résonateur à fibre optique (RES) et aux moyens (M) destinés à modifier la longueur de parcours optique (L), et le dispositif de régulation est réalisé de telle sorte qu'à partir d'une partie du signal de sortie (A) du laser à fibre optique (LAS) un signal de régulation peut être généré pour les moyens (M) destinés à modifier la longueur de parcours optique (L) de telle sorte que la fréquence de rotation de la lumière dans le résonateur à fibre optique est synchronisée avec la fréquence de récurrence des impulsions prédéterminée, caractérisé en ce que le dispositif de régulation (RE) est en outre réalisé de telle sorte qu'un signal parasite, brouillant la lumière de signal, dont l'amplitude est utilisée pour mesurer la dérive de la synchronisation de la fréquence de rotation de la fréquence de récurrence des impulsions prédéterminée, et dont la fréquence est inférieure à la fréquence de récurrence des impulsions, peut être déterminé, et en ce qu'à partir de l'amplitude du signal parasite, le signal de régulation peut être dérivé.

2. Laser à fibre optique à blocage de mode (LAS) selon la revendication 1, caractérisé en ce que le dispositif de régulation (RE) comprend un convertisseur optique/ électrique (OE), un dispositif de détection (DET), un amplificateur (AMP) et un régulateur (PI), en ce que dans le dispositif de détection (DET), la valeur effective de l'amplitude du signal parasite peut être déterminée, et en ce que le signal de régulation pour les moyens (M) destinés à modifier la longueur de parcours optique (L) peut être dérivé à partir de la valeur effective.

3. Laser à fibre optique à blocage de mode (LAS) selon la revendication 1, caractérisé en ce que l'amplificateur (AMP) est réalisé comme un amplificateur sensible à la phase et le signal de régulation est modulé (fw).

4. Laser à fibre optique à blocage de mode (LAS) selon la revendication 1, caractérisé en ce que le résonateur à fibre optique (RES) est un résonateur annulaire.

5. Laser à fibre optique à blocage de mode (LAS) selon la revendication 1, caractérisé en ce que le laser à fibre optique à blocage de mode (LAS) est un laser à fibre optique à blocage de mode actif.
